# FASCICULE DE BREVET EUROPEEN

(11) **EP 2 658 173 B1**
(45) Date de publication et mention de la délivrance du brevet: **23.12.2015**
(21) Numéro de dépôt: 13164565.7
(22) Date de dépôt: 19.04.2013
(51) Int. Cl.: H04L 12/18, H04L 12/00, H04L 12/40

(54) **Commutateur pour relier sélectivement un récepteur à l'une de deux sources de signaux, et centrale de gestion de communications comportant un tel commutateur**
Schalter zur selektiven Verbindung eines Empfängers mit einer von zwei Signalquellen, und Kommunikationsverwaltungszentrale, die einen solchen Schalter umfasst
Switch for selectively connecting a receiver to one of two signal sources, and communication management unit comprising such a switch

(30) Priorité: 23.04.2012 FR 1201194
(43) Date de publication de la demande: 30.10.2013
(73) Titulaire: Team, 94563 Rungis Cedex (FR)
(72) Inventeur: Boulard, Christian, 92140 Clamart (FR); Bouda, Rabah, 91180 Saint-Germain-Les-Arpajon (FR)
(74) Mandataire: Parzy, Benjamin Alain

(56) Documents cités:
- US-A1- 2004 120 707
- US-A1- 2005 105 527
- US-A1- 2011 243 329

## Description

L'invention concerne un équipement de télécommunications, utilisable dans un réseau de communications d'aéronef pour relier sélectivement un récepteur à l'une de deux sources de signaux. Il peut s'agir d'un commutateur, d'une centrale de gestion de communications (en anglais, AMU pour audio management unit) destinée à équiper un aéronef. L'invention est également relative à une architecture de communication d'aéronef faisant appel à un tel équipement.

### ARRIERE-PLAN TECHNOLOGIQUE DE L'INVENTION

Les aéronefs sont équipes de divers moyens de communication permettant d'échanger des signaux de voix ou de données soit avec l'extérieur (radios UHF, VHF, systèmes de radionavigation...), soit entre divers utilisateurs dans l'aéronef (intercom).

Dans certains aéronefs, une partie des signaux peut comporter des informations sensibles, qui ne doivent en aucun cas pouvoir être interceptées de quelque manière que ce soit par un tiers non autorisé à prendre connaissance de ces informations sensibles. Le document US 2005/105527 A1 dévoile un système de communication permettant d'assurer la confidentialité des communications de tels signaux. Ces signaux, appelés signaux rouges, sont en général cryptés avant émission radio et décryptés après réception radio. Pour la suite, on définit les termes suivants :
- TEMPEST est l'acronyme de *Telecommunications Electronic Material Protected from Emanating Spurious Transmissions.*
- TEMPEST COMSEC : est un dispositif sécurisé de communications apte à garantir la confidentialité d'un signal suivant la norme AMSG 784 B volume 1.
- Signal Rouge : est un signal de voix ou de données dont le contenu est sensible.
- Zone Rouge : Zone physique de l'aéronef dans laquelle le signal rouge est présent. Elle comprend les composants électroniques, les éléments mécaniques, ainsi que, par extension, les logiciels ou programme permettant la génération ou la circulation du signal rouge.

- Signal Noir : est un signal de voix ou de données dont le contenu n'est pas considéré comme sensible.
- Zone Noire : Zone physique dans laquelle le signal noir est présent. Elle comprend les composants électroniques, les éléments mécaniques, ainsi que, par extension, les logiciels ou programme permettant la génération ou la circulation du signal noir.
- Zone Rose : Zone physique dans laquelle le signal présent peut être noir ou rouge selon les modalités de communication en cours.
- Diaphonie : interférence d'un premier signal avec un second signal, souvent en raison de phénomènes d'induction électromagnétique. Le taux de diaphonie entre deux signaux, ou son contraire, le taux de séparation, est chiffré en décibels.

Il existe un risque de diaphonie par lequel un signal rouge pourrait interférer avec un signal noir. Le signal noir contenant une telle interférence pourrait être alors capté. Il est possible dans certains cas de reconstituer le signal rouge à partir de l'interférence qu'il a laissé dans le signal noir. C'est une situation que l'on cherche à éviter en limitant au maximum le risque de diaphonie. A cet effet, les aéronefs concernés sont généralement équipés de réseaux rouges et de réseaux noirs, totalement ségrégués. En particulier, les centrales de gestion de communications utilisées sont dédiées chacune à l'un ou à l'autre des types de signaux. Cette disposition oblige à une multiplication des composants qui entraîne une augmentation des coûts et de la masse de l'architecture de communication de l'aéronef.

### OBJET DE L'INVENTION

L'invention a pour objet de proposer un équipement de communication pour relier sélectivement un récepteur à l'une de deux sources de signaux, permettant une simplification de l'architecture d'un réseau de communications d'un aéronef susceptible de convoyer au moins deux types de signaux différents.

### RESUME DE L'INVENTION

En vue de la réalisation de ce but, on propose un équipement de communication, notamment pour équiper un réseau de communications d'aéronef, comportant au moins une sortie destinée à être reliée à au moins un récepteur, et au moins des première et deuxième entrées destinées à être reliées à deux sources de signaux respectivement d'un premier type et d'un deuxième type, l'équipement définissant des zones électromagnétiquement isolées entre elles, dont :
- une première zone comportant un premier canal de transmission pour transporter les signaux du premier type, un premier sélecteur commandé étant interposé entre la première entrée et le premier canal de transmission pour placer le premier canal de transmission soit dans un état actif dans lequel il est connecté à la première entrée pour transporter les signaux issus de la première entrée, soit dans un état passif dans lequel il est isolé de la première entrée et empêché de rayonner ;
- une deuxième zone comportant un deuxième canal de transmission pour transporter les signaux du deuxième type, un deuxième sélecteur commandé étant interposé entre la deuxième entrée et le deuxième canal de transmission pour placer le deuxième canal de transmission soit dans un état actif dans lequel il est connecté à la deuxième entrée pour transporter les signaux issus de la deuxième entrée, soit dans un état passif dans lequel il est isolé de la deuxième entrée et empêché de rayonner ;
- une troisième zone dans laquelle débouchent les premiers et deuxième canaux de transmission et comportant un troisième canal de transmission reliée à la sortie du commutateur, un troisième sélecteur commandé étant interposé entre le troisième canal de transmission et les premier et deuxième canaux de sortie pour connecter sélectivement le troisième canal de transmission au premier canal de
transmission ou au deuxième canal de transmission ; Les sélecteurs étant associés à des moyens de commande simultanée de sorte que lorsque l'un des premier ou deuxième canaux de transmission est dans un état actif et est connecté au troisième canal de transmission, l'autre des premier ou deuxième canaux de transmission est dans un état passif.

Ainsi, les canaux de transmission de l'équipement de l'invention ne peuvent s'influencer entre eux car ils sont magnétiquement isolés. Par ailleurs, lorsque le premier canal de transmission est connecté au troisième canal de transmission, le deuxième canal de transmission est empêché de rayonner de sorte qu'aucun signal éventuellement présent sur le deuxième canal de transmission ne peut interférer avec le signal transitant entre les premier et troisième canaux de transmission. Réciproquement, lorsque le deuxième canal de transmission est connecté au troisième canal de transmission, le premier canal de transmission est empêché de rayonner de sorte qu'aucun signal éventuellement présent sur le premier canal de transmission ne peut interférer avec le signal transitant entre les deuxième et troisième canaux de transmission.

Pour empêcher le premier ou le deuxième canal de transmission de rayonner, il suffit par exemple de le connecter à la masse mécanique constituée par le carter de l'équipement.

Ainsi, l'invention permet l'utilisation d'un même équipement pour gérer deux types de signaux tout en minimisant les risques de diaphonie, ce qui permet de simplifier les architectures des réseaux de communication des aéronefs.

Il peut exister un besoin de transférer directement un signal de la première zone à la deuxième zone de l'équipement. En particulier, si le premier canal de transmission est défaillant, il est utile de pouvoir faire transiter le signal traité passant dans la première zone par la deuxième zone pour le faire sortir par le deuxième canal de transmission. Cependant, il convient en général de garantir qu'aucun signal ne puisse transiter de la deuxième zone à la première zone.

Ainsi, et selon un mode particulier de réalisation, l'équipement de l'invention comporte un photocoupleur comprenant un émetteur de lumière reliée aux premiers composants électroniques et un récepteur de lumière relié aux deuxièmes composants électroniques, l'émetteur et le récepteur étant placé de sorte que le récepteur puisse recevoir la lumière émise par l'émetteur de lumière au travers d'un passage ménagé dans le carter entre les première et deuxième zones.

L'utilisation d'un photocoupleur permet un passage unilatéral d'un signal de la première zone à la deuxième zone, sans risque qu'un signal puisse transiter en sens inverse ni risque d'interférence.

De préférence, alors, l'équipement de l'invention comporte un interrupteur commandé pour autoriser sélectivement l'émetteur à émettre. Ainsi, l'émetteur ne peut émettre que s'il est autorisé, de sorte que l'on diminue les risques d'émission intempestive permettant la fuite non désirée d'un signal d'une zone à l'autre.

L'invention est encore relative à un réseau de communications d'un aéronef comportant un tel équipement, qui peut par exemple prendre la forme d'un commutateur ou d'une centrale de gestion de communications.

### BREVE DESCRIPTION DES FIGURES

L'invention sera mieux comprise à la lumière de la description qui suit d'un mode particulier de réalisation non limitatif de l'invention en référence aux figures des dessins annexés parmi lesquelles :
- la figure 1 est un schéma de principe d'un équipement selon l'invention, sous la forme d'une centrale de gestion de communications capable de gérer deux types de signaux, illustré dans un premier état de commutation ;
- la figure 2 est un schéma analogue à celui de la figure 1, montrant la centrale dans un deuxième état de commutation ;
- la figure 3 est un schéma d'une variante de réalisation de la centrale de la figure 1, équipée de moyens de transfert de signaux entre des zones distinctes de la centrale ;
- la figure 4 est un schéma de la variante de la figure 3 équipée de moyens de sécurité ;
- la figure 5 est un schéma d'une architecture d'un réseau de radiocommunications d'un aéronef intégrant une centrale de communications selon l'invention ;
- la figure 6 est un schéma d'une communication par fibre optique entre la centrale de gestion de communications de l'invention et un terminal ;
- la figure 7 est un schéma d'un autre équipement selon l'invention, sous la forme d'un commutateur interposable entre deux sources de signaux et un récepteur.

### DESCRIPTION DETAILLEE D'UN MODE DE REALISATION

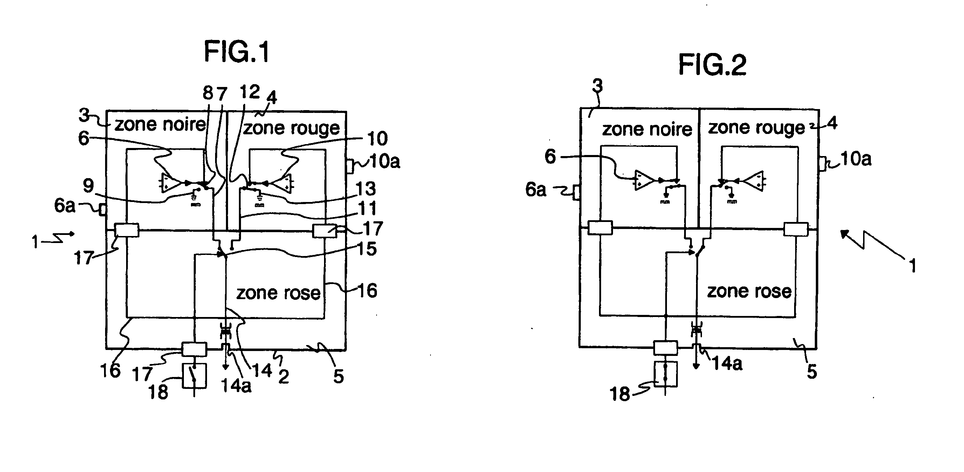

En référence à la figure 1, la centrale de gestion de communications 1 de l'invention comporte un carter métallique 2 formant un blindage qui partitionne l'intérieur de la centrale 1 en trois zones électromagnétiquement isolées, dont une zone noire 3 dans laquelle sont gérés des signaux noirs, une zone rouge 4 dans laquelle sont gérés des signaux rouges, et une zone rose 5, ainsi appelée car elle peut voir transiter des signaux rouges ou des signaux noirs.

La zone noire 3 accueille des composants électroniques 6 (symbolisés ici par un amplificateur, mais comportant toutes sortes de composants, tels qu'un processeur, une mémoire tampon, des filtres...) adaptés à gérer des signaux noirs. Ces composants électroniques sont reliés à une première entrée 6a pour recevoir de l'extérieur des signaux noirs et sont mis en communication avec un canal de transmission noir 7, ici un simple câble métallique qui débouche dans la zone rose 5. Entre les composants électroniques 6 et le canal de transmission noir 7 est interposé un sélecteur 8 qui permet de connecter sélectivement le canal de transmission noir 7 soit aux composants électroniques 6 pour permettre une transmission d'un signal noir, soit à une masse mécanique 9.

De la même façon, La zone rouge 4 accueille des composants électroniques 10 (symbolisés ici par un amplificateur, mais comportant toutes sortes de composants, tels qu'un processeur, une mémoire tampon, des filtres...) adaptés à gérer des signaux rouge. Ces composants électroniques 10 sont reliés à une entrée rouge 10a et sont mis en communication avec un canal de transmission rouge 11, ici un simple câble métallique qui débouche dans la zone rose 5. Entre les composants électroniques 10 et le canal de transmission rouge 11 est interposé un sélecteur 12 qui permet de connecter sélectivement le canal de transmission rouge 11 soit aux composants électroniques 10 pour permettre une transmission d'un signal rouge, soit à une masse mécanique 13.

Lorsque le canal de transmission 7,11 est relié aux composants 6,10 correspondants, le canal est dans un état actif et permet la transition du signal correspondant. Lorsque le canal de transmission est relié à la masse mécanique, il est dans un état passif dans lequel non seulement il ne peut rien transmettre, mais il est empêché de rayonner.

Les canaux de transmission noir 7 et rouge 12 débouchent dans la zone rose 5 dans laquelle s'étend un canal de transmission rose 14 qui peut être sélectivement mis en communication soit avec le canal de transmission noir 7, soit avec le canal de transmission rouge 12 par l'intermédiaire d'un sélecteur rose 15. C'est par le canal de transmission rose 14 qui est relié à une sortie 14a que la centrale 1 échange des signaux avec l'extérieur.

Ici, la centrale 1 est équipée d'une commande 18, ici un simple interrupteur commandé délivrant des impulsions aux sélecteurs 8, 12 et 15 pour les placer simultanément :
- soit dans un premier état de commutation illustré à la figure 1 dans lequel le sélecteur noir 8 met les composants électroniques noirs en communication avec le canal de transmission noir, le sélecteur rose 14 met en communication le canal de transmission rose 14 avec le canal de transmission noir 8, tandis que le sélecteur rouge 12 met le canal de transmission rouge à la masse mécanique ;
- soit dans un deuxième état de commutation illustré à la figure 2, dans lequel le sélecteur rouge 12 met les composants électroniques rouges 10 en communication avec le canal de transmission rouge 11, le sélecteur rose 15 met en communication le canal de transmission rose 14 avec le canal de transmission rouge 11, tandis que le sélecteur noir 8 met le canal de transmission noir 7 à la masse mécanique.

Ainsi, dans chacun des états, seul l'un des types de signaux peut transiter entre l'extérieur du boîtier et la zone correspondante, sans risque que le canal de transmission de l'autre zone puisse générer une quelconque interférence, puisqu'il est mis à la masse mécanique. On parvient donc à gérer deux types de signaux dans une même centrale, avec un risque de diaphonie particulièrement réduit.

De préférence, les sélecteurs 8,12,15 sont de simples interrupteurs commandés par une impulsion provenant de la commande de commutation 18, l'impulsion étant fournie simultanément aux trois interrupteurs par des fils 16 qui sont munis de filtres 17 au passage d'une zone à une autre ou en sortie de la zone rose 5, pour éviter que ces fils n'influencent les canaux de transmission de la centrale.

Lorsque les sélecteurs sont défaillants, et qu'ils restent bloqués dans l'un des états de commutation, l'un des types de signaux ne peut plus être envoyé par le canal correspondant. Un des moyens de circonvenir à cette défaillance est de faire transiter le signal qui ne peut être transmis par le canal correspondant par l'autre canal, en faisant transiter le signal par l'autre zone. A cet effet, et selon un aspect particulier de l'invention, la centrale est équipée de moyens de communication interzone 19 pour faire communiquer directement les composants électroniques noirs 6 et les composants électroniques rouges 10.

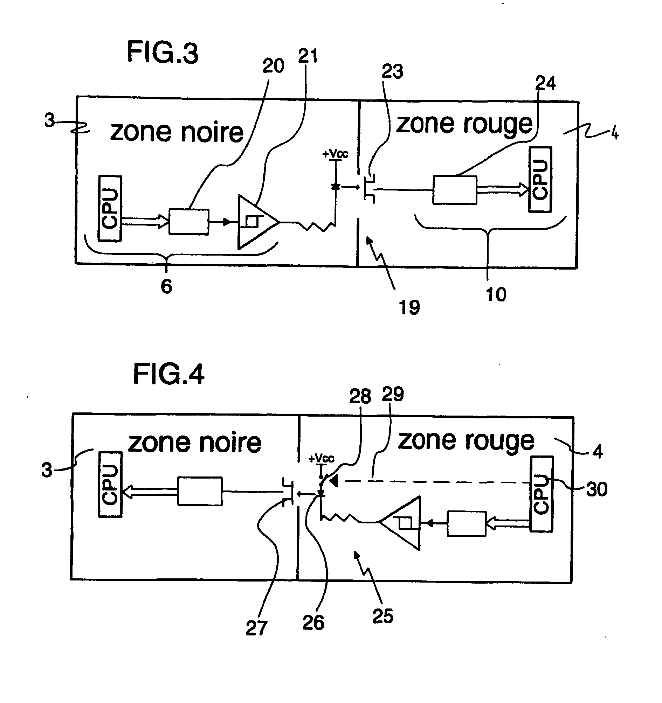

Comme illustré à la figure 3, les composants électroniques noirs 6 comportent ici un transcodeur parallèle/série 20 pour transformer un signal noir en une suite de bits en série. Ces bits sont ensuite fournis à un tampon 21 qui alimente la diode émettrice 22 d'un photocoupleur dont le récepteur est ici un transistor photoélectrique 23 placé dans la zone rouge. Le signal électrique généré par le transistor 23 en réponse à la réception d'impulsions lumineuses générées par la diode 22 est retransformé par un transcodeur série/parallèle 24 en un signal gérable par les composants électroniques rouges 10. On remarquera que l'émetteur optique 22 et le récepteur optique 23 coopèrent directement au travers d'un orifice ménagé dans la partie du carter 2 séparant la zone noire de la zone rouge, et que la communication ainsi organisée est unidirectionnelle. En effet, aucun signal ne peut être transmis de la zone rouge à la zone noire par les moyens de communication ci-dessus décrits. Le cas échéant, on pourra faire transiter les signaux optiques par l'intermédiaire d'une fibre optique traversant la séparation entre les deux zones s'il n'est pas possible ou malcommode d'installer l'émetteur optique et le récepteur optique en regard.

Ainsi, on parvient à faire passer un signal d'une zone à l'autre sans risque de diaphonie, les signaux optiques émis ne pouvant sortir des zones noires et rouges et donc influencer le canal de transmission rose 14.

Sur la figure 4, on a illustré des moyens de communication interzone 25 similaires à ceux de la figure 3, mais adaptés cette fois-ci à faire passer des signaux rouges de la zone rouge 4 à la zone noire 3. On retrouve la diode formant émetteur optique 26 (cette fois-ci dans la zone rouge), ainsi que le transistor photoélectrique formant le récepteur optique 27 (cette fois-ci dans la zone noire). Il importe que, dans ce sens de communication, la communication de signaux n'ait lieu que lorsqu'elle est effectivement commandée, en évitant toute communication non désirée. En effet, il convient d'éviter absolument toute transmission non désirée de signaux rouges, donc sensibles. A cet effet, les moyens de communication interzone 25 sont équipés d'un interrupteur 28 permettant de contrôler le potentiel de l'émetteur optique 26, et de porter ce potentiel au potentiel d'émission Vcc que si une communication interzone est désirée. A cet effet, un signal de commande 29 est généré par un processeur 30 équipant la zone rouge pour commander l'interrupteur 28 en vue de mettre sélectivement le potentiel de l'émetteur optique 26 au potentiel d'émission Vc ou à la masse mécanique. Dans ce dernier cas il n'y a aucun risque de transmission de signaux via le photocoupleur, même si le tampon qui connecté à l'émetteur optique 26 n'est pas vide.

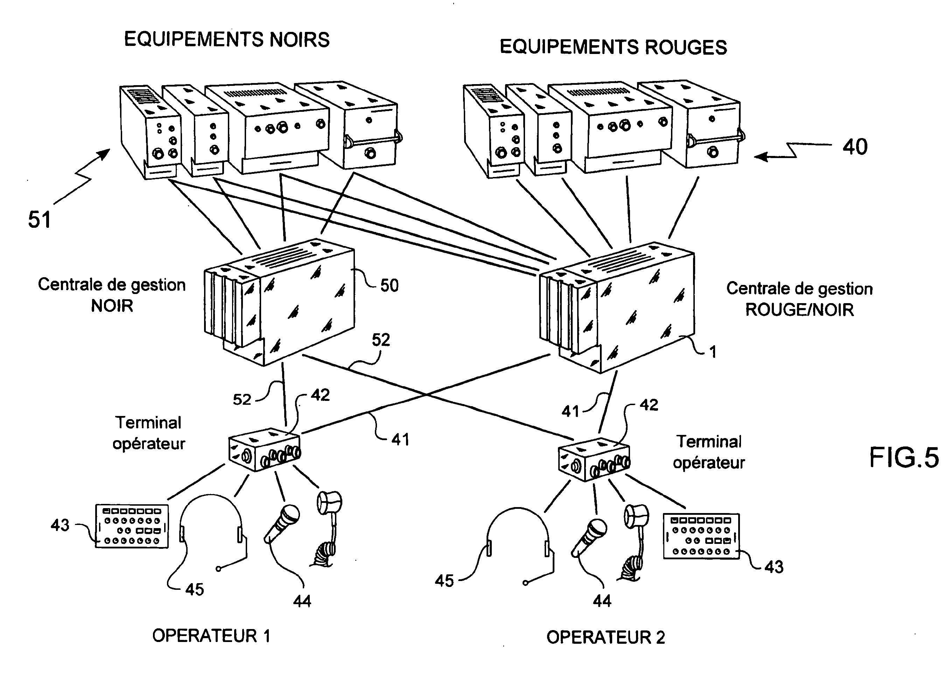

La centrale de l'invention peut être intégrée dans un réseau de communications d'un aéronef tel qu'illustré à la figure 5. La centrale de gestion de communications 1 de l'invention forme ici une première centrale de communications du réseau, qui est reliée par son entrée 10a à des équipements radio 40 tels que des radios de communication (VHF, UHF...), convoyant des signaux rouges, ainsi que des équipement radio 51 tels que des radios de communications, des radios de navigation, ou encore des générateurs d'alerte radio, convoyant des signaux noirs. La centrale de gestion de communications 1 est reliée par sa sortie 14a à des terminaux 42 à disposition des opérateurs (pilote, copilote, opérateur de soute...) de l'aéronef, par l'intermédiaire de fibres optiques 41. L'usage de fibres optiques empêche toute possibilité que les signaux convoyés puissent interférer avec d'autres signaux convoités par des conducteurs métalliques non ou insuffisamment protégés.

De façon connue en soi, chaque terminal comporte ici une interface 43, des micros 44, des écouteurs 45 permettant à chaque opérateur de communiquer avec d'autres opérateurs de l'aéronef, ou avec l'environnement extérieur de l'aéronef.

Pour des raisons de redondance, le réseau de gestion de communications peut comporter comme illustré une deuxième centrale de communications 50, capable de gérer uniquement des signaux noirs, et qui est reliée uniquement équipements radio 51 convoyant des signaux noirs. La deuxième centrale de communications 50 est reliée aux mêmes terminaux 42, mais cette fois-ci par de simples câbles métalliques 52.

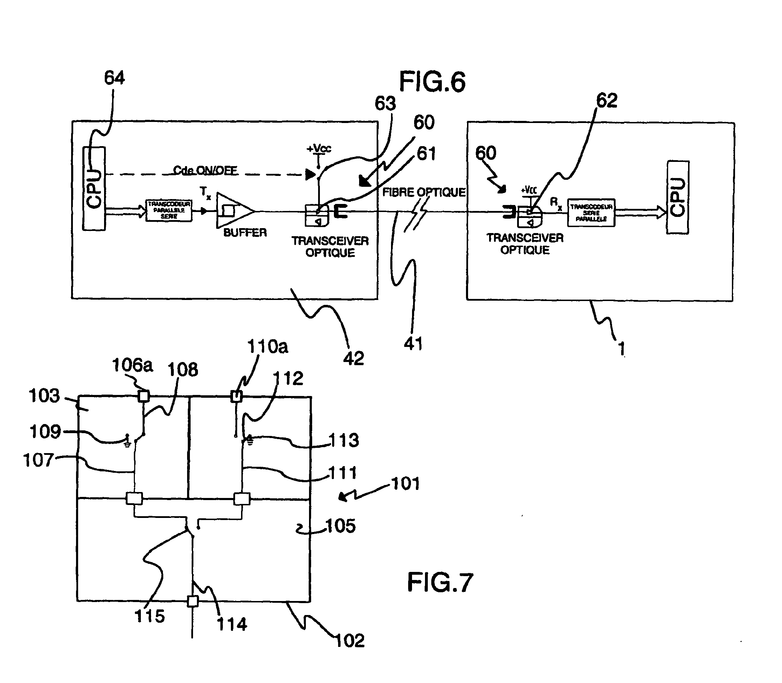

La façon dont la centrale de gestion de communications 1 communique avec les terminaux 42 est maintenant expliquée en relation avec la figure 6. Ici, on a représenté une communication depuis le terminal vers la centrale de gestion de communications 1. Le même fonctionnement est à l'oeuvre lors d'une communication dans l'autre sens. Un photocoupleur 60 est utilisé pour communiquer via la fibre optique 41. Le photocoupleur comporte un émetteur optique 61 (ici une diode) disposée dans le terminal 42, et un récepteur optique 62 (ici un transistor photoélectrique) recevant les signaux optiques de l'émetteur optique 61 via la fibre optique 41. Ici, pour éviter toute communication intempestive, le potentiel de l'émetteur optique 61 est contrôlé par un interrupteur 63 commandé par un processeur 64 du terminal 42, l'interrupteur permettant de mettre l'émetteur soit à un potentiel d'émission Vcc, soit à la masse mécanique pour empêcher la diode d'émettre.

L'utilisation d'une fibre optique empêche que le signal qui transite par la fibre optique (qui peut être un signal rouge) ne puisse influencer les câbles environnants qui transportent d'autres signaux, et y laisser une trace sous forme de bruit.

Les mêmes dispositions de l'invention peuvent être utilisées pour réaliser un commutateur 101 illustré à la figure 7, sur laquelle les éléments communs avec les figures précédentes portent une référence augmentée d'une centaine.

On reconnaît le carter 102 définissant dans le commutateur trois zones 103,104,105, respectivement la zone noire, la zone rouge et la zone rose.

La zone noire 103 comporte une entrée noire 106a qui est mise en communication avec un canal de transmission noir 107 qui débouche dans la zone rose 105 par l'intermédiaire du sélecteur 108 qui permet de connecter sélectivement le canal de transmission noir 107 soit à l'entrée noire 106a pour permettre une transmission d'un signal noir, soit à une masse mécanique 109.

De la même façon, La zone rouge 104 comporte une entrée rouge 110a qui est mise en communication avec un canal de transmission rouge 111 qui débouche dans la zone rose 105 par l'intermédiaire du sélecteur 112 qui permet de connecter sélectivement le canal de transmission rouge 111 soit à l'entrée rouge 110a pour permettre une transmission d'un signal rouge, soit à une masse mécanique 113.

Lorsque le canal de transmission 107,111 est relié aux entrées correspondantes 106a,110a, le canal est dans un état actif et permet la transition du signal correspondant. Lorsque le canal de transmission est relié à la masse mécanique, il est dans un état passif dans lequel non seulement il ne peut rien transmettre, mais il est empêché de rayonner.

Les canaux de transmission noir 107 et rouge 111 débouchent dans la zone rose 105 dans laquelle s'étend un canal de transmission rose 114 qui peut être sélectivement mis en communication soit avec le canal de transmission noir 107, soit avec le canal de transmission rouge 111 par l'intermédiaire d'un sélecteur rose 115. C'est par le canal de transmission rose 114 qui est relié à une sortie 114a que le commutateur 101 échange des signaux avec l'extérieur.

Bien sûr, les trois sélecteurs 108, 112,115 sont coordonnés et commandés simultanément, comme auparavant.

Un tel commutateur peut par exemple être placé en amont d'une centrale de gestion de commutation pour lui faire parvenir, par la même entrée, des signaux rouges ou des signaux noirs, sans risque de diaphonie entre les deux signaux.

L'invention n'est pas limitée à ce qui vient d'être décrit, mais englobe au contraire toute variante entrant dans le cadre défini par les revendications.

En particulier, bien que dans le réseau de communications, la centrale de gestion de communications de l'invention soit utilisée en parallèle d'une deuxième centrale adaptée à gérer uniquement des signaux noirs, cette architecture n'est bien sûr pas limitative, et on pourra insérer la centrale de gestion de communications de l'invention dans toute autre réseau de communications, par exemple un réseau comportant plusieurs centrales de communications qui sont toutes conformes à l'invention.

## Revendications

1. Equipement de communication pour équiper un réseau de communications d'aéronef, **caractérisé en ce qu'**il comporte au moins une sortie (14a;114a) destinée à être reliée à au moins un récepteur, et au moins des première et deuxième entrées (6a,10a;106a,110a) destinées à être reliées à deux sources de signaux respectivement d'un premier type (NOIR) et d'un deuxième type (ROUGE), l'équipement définissant des zones électromagnétiquement isolées entre elles, dont :
- une première zone (3;103) comportant un premier canal de transmission (7;107) pour transporter les signaux du premier type, un premier sélecteur commandé (8;108) étant interposé entre la première entrée et le premier canal de transmission pour placer le premier canal de transmission soit dans un état actif dans lequel il est connecté à la première entrée pour transporter les signaux issus de la première entrée, soit dans un état passif dans lequel il est isolé de la première entrée et empêché de rayonner ;
- une deuxième zone (4;104) comportant un deuxième canal de transmission (11;111) pour transporter les signaux du deuxième type, un deuxième sélecteur (12;112) commandé étant interposé entre la deuxième entrée et le deuxième canal de transmission pour placer le deuxième canal de transmission soit dans un état actif dans lequel il est connecté à la deuxième entrée pour transporter les signaux issus de la deuxième entrée, soit dans un état passif dans lequel il est isolé de la deuxième entrée et empêché de rayonner ;
- une troisième zone (5;105) dans laquelle débouchent les premiers et deuxième canaux de transmission et comportant un troisième canal de transmission reliée à la sortie du commutateur, un troisième sélecteur (15;115) commandé étant interposé entre le troisième canal de transmission et les premier et deuxième canaux de sortie pour connecter sélectivement le troisième canal de transmission au premier canal de transmission ou au deuxième canal de transmission ;
les sélecteurs étant associés à des moyens de commande (18;118) simultanée de sorte que lorsque l'un des premier ou deuxième canaux de transmission est dans un état actif et est connecté au troisième canal de transmission, l'autre des premier ou deuxième canaux de transmission est dans un état passif.

2. Equipement de communication selon la revendication 1, comportant des moyens de transmission directe (19) d'un signal entre la première zone et la deuxième zone.

3. Equipement de communication selon la revendication 2, dans laquelle les moyens de transmission directe comprennent des moyens de conversion d'un signal du premier ou du deuxième type en un signal optique propre à être transmis par un photocoupleur (19) comportant un émetteur optique (22) relié aux composants électroniques de l'une des première et deuxième zones, et un récepteur optique (23) relié aux composants électroniques de l'autre des première et deuxième zones, l'émetteur et le récepteur coopérant optiquement au travers d'un orifice d'une portion du carter séparant les première et deuxième zones.

4. Equipement de communication selon la revendication 3, comportant des moyens de commande (28) d'un potentiel de l'émetteur optique pour mettre l'émetteur optique soit à un potentiel d'émission (Vcc), soit à la masse mécanique pour l'empêcher d'émettre.

5. Equipement de communication selon la revendication 1 dans lequel :
- La première zone comporte des premiers composants électroniques (6) aptes à traiter le premier type de signal (NOIR) et qui sont interposés entre la première entrée et le premier sélecteur ;
- la deuxième zone comporte des deuxièmes composants électroniques (10) aptes à traiter le deuxième type de signal (ROUGE) et qui sont interposés entre la première entrée et le deuxième sélecteur.

6. Réseau de communications d'aéronef intégrant au moins un équipement de communication selon l'une des revendications 1 à 5.

7. Réseau de communications d'aéronef selon la revendication 6, et incluant des terminaux de communication (42) à la disposition des opérateurs qui sont reliés à l'équipement par des fibres optiques (52) par lesquelles passent les signaux échangés entre les terminaux et l'équipement.

8. Réseau de communications selon la revendications 7, dans lequel l'équipement de communication et les terminaux sont équipés de moyens d'émission optique et de réception optique pour échanger des signaux optiques, l'équipement et les terminaux comportant des moyens de commande (63) d'un potentiel de l'émetteur optique pour mettre l'émetteur optique soit à un potentiel d'émission (Vcc), soit à une masse pour l'empêcher d'émettre.

## Patentansprüche

1. Kommunikationseinrichtung zum Ausrüsten eines Kommunikationsnetzes eines Luftfahrzeugs, **dadurch gekennzeichnet, dass** sie mindestens einen Ausgang (14a; 114a) umfasst, der dazu bestimmt ist, mit mindestens einem Empfänger verbunden zu werden, sowie mindestens einen ersten und zweiten Eingang (6a, 10a; 106a, 110a), die dazu bestimmt sind, mit einer Signalquelle eines ersten Typs (SCHWARZ) bzw. einer Signalquelle eines zweiten Typs (ROT) verbunden zu werden, wobei die Einrichtung zueinander elektromagnetisch isolierte Zonen definiert, darunter:
- eine erste Zone (3; 103), die einen ersten Übertragungskanal (7; 107) umfasst, um die Signale des ersten Typs zu transportieren, wobei ein erster Steuerungswähler (8; 108) zwischen dem ersten Eingang und dem ersten Übertragungskanal angeordnet ist, um den ersten Übertagungskanal entweder in einen aktiven Zustand zu versetzen, in dem er mit dem ersten Eingang verbunden ist, um die von dem ersten Eingang stammenden Signale zu transportieren, oder in einen passiven Zustand, in dem er von dem ersten Eingang isoliert ist und am Senden gehindert wird;
- eine zweite Zone (4; 104), die einen zweiten Übertragungskanal (11; 111) umfasst, um die Signale des zweiten Typs zu transportieren, wobei ein zweiter Steuerungswähler (12; 112) zwischen dem zweiten Eingang und dem zweiten Übertragungskanal angeordnet ist, um den zweiten Übertragungskanal entweder in einen aktiven Zustand zu versetzen, in dem er mit dem zweiten Eingang verbunden ist, um die von dem zweiten Eingang stammenden Signale zu transportieren, oder in einen passiven Zustand, in dem er von dem zweiten Eingang isoliert ist und am Senden gehindert wird;
- eine dritte Zone (5; 105), in die der erste und der zweite Übertragungskanal münden und die einen dritten Übertragungskanal umfasst, der mit dem Ausgang des Schalters verbunden ist, wobei ein dritter Steuerungswähler (15; 115) zwischen dem dritten Übertragungskanal und dem ersten und dem zweiten Übertragungskanal angeordnet ist, um den dritten Übertragungskanal selektiv mit dem ersten Übertragungskanal oder dem zweiten Übertragungskanal zu verbinden;
wobei die Wähler mit Mitteln (18; 118) zur gleichzeitigen Steuerung verbunden sind, derart, dass, wenn der erste oder der zweite Übertragungskanal in einem aktiven Zustand und mit dem dritten Übertragungskanal verbunden ist, der jeweils andere dieser beiden Übertragungskanäle in einem passiven Zustand ist.

2. Kommunikationseinrichtung nach Anspruch 1, umfassend Mittel (19) zur direkten Übertragung eines Signals zwischen der ersten Zone und der zweiten Zone.

3. Kommunikationseinrichtung nach Anspruch 2, wobei die Mittel zur direkten Übertragung Mittel zur Umwandlung eines Signals des ersten oder des zweiten Typs in ein optisches Signal umfassen, das dazu geeignet ist, von einem Optokoppler (19) übertragen zu werden, der einen optischen Sender (22) umfasst, der mit elektronischen Bauelementen der ersten oder der zweiten Zone verbunden ist, sowie einen optischen Empfänger (23), der mit elektronischen Bauelementen der jeweils anderen dieser beiden Zonen verbunden ist, wobei der Sender und der Empfänger optisch durch eine Öffnung in einem Abschnitt des Gehäuses zusammenwirken, der die erste und die zweite Zone trennt.

4. Kommunikationseinrichtung nach Anspruch 3, umfassend Steuermittel (28) zum Steuern eines Potentials des optischen Senders, um den optischen Sender entweder auf ein Sendepotential (Vcc) zu bringen, oder auf mechanische Masse, um ihn am Senden zu hindern.

5. Kommunikationseinrichtung nach Anspruch 1, wobei:
- die erste Zone erste elektronische Bauelemente (6) umfasst, die dazu geeignet sind, den ersten Signaltyp (SCHWARZ) zu verarbeiten, und die zwischen dem ersten Eingang und dem ersten Wähler angeordnet sind;
- die zweite Zone zweite elektronische Bauelemente (10) umfasst, die dazu geeignet sind, den zweiten Signaltyp (ROT) zu verarbeiten, und die zwischen dem ersten Eingang und dem zweiten Wähler angeordnet sind.

6. Kommunikationsnetz für ein Luftfahrzeug, das mindestens eine Kommunikationseinrichtung nach einem der Ansprüche 1 bis 5 integriert.

7. Kommunikationsnetz für ein Luftfahrzeug nach Anspruch 6, und enthaltend Kommunikationsterminals (42) zur Verfügung für Bedienpersonen, wobei die Kommunikationsterminals mit der Einrichtung über Lichtleitfasern (52) verbunden sind, durch die die zwischen den Terminals und der Einrichtung ausgetauschten Signale hindurchgehen.

8. Kommunikationsnetz nach Anspruch 7, wobei die Kommunikationseinrichtung und die Terminals mit Mitteln zum optischen Senden und optischen Empfangen ausgestattet sind, um optische Signale auszutauschen, wobei die Einrichtung und die Terminals Mittel (63) zum Steuern eines Potentials des optischen Senders umfassen, um den optischen Sender entweder auf ein Sendepotential (Vcc) zu bringen, oder auf Masse, um ihn am Senden zu hindern.

## Claims

1. Communication unit for equipping an aircraft communication network, **characterised in that** it has at least one output (14a; 114a) intended to be connected to at least one receiver and at least first and second inputs (6a, 10a; 106a, 110a) intended to be connected to two sources of signals of a first type (BLACK) and a second type (RED), respectively, the unit defining areas electromagnetically isolated from one another, including:
- a first area (3; 103) having a first transmission channel (7; 107) for transporting the signals of the first type, a first selector (8; 108) being disposed between the first input and the first transmission channel to place the first transmission channel either in an active state in which it is connected to the first input to transport the signals from the first input or in a passive state in which it is isolated from the first input and prevented from transmitting;
- a second area (4; 104) having a second transmission channel (11; 111) for transporting the signals of the second type, a second selector (12; 112) being disposed between the second input and the second transmission channel to place the second transmission channel either in an active state in which it is connected to the second input to transport the signals from the second input or in a passive state in which it is isolated from the second input and prevented from transmitting;
- a third area (5; 105) to which the first and second transmission channels lead and having a third transmission channel connected to the output of the switch, a third selector (15; 115) being disposed between the third transmission channel and the first and second output channels to connect the third transmission channel selectively to the first transmission channel or to the second transmission channel,
the selectors being associated with simultaneous control means (18; 118) so that when one of the first or second transmission channels is in an active state and is connected to the third transmission channel the other of the first or second transmission channels is in a passive state.

2. Communication unit according to claim 1, including means (19) for directly transmitting a signal between the first area and the second area.

3. Communication unit according to claim 2, wherein the direct transmission means include means for converting a signal of the first or second type into an optical signal adapted to be transmitted by an optocoupler (19) having an optical sender (22) connected to the electronic components of one of the first and second areas and an optical receiver (23) connected to the electronic components of the other of the first and second areas, the sender and the receiver cooperating optically through an orifice in a portion of the housing separating the first and second areas.

4. Communication unit according to claim 3, including means (28) for controlling a potential of the optical sender to set the optical sender either to a sending potential (Vcc) or to the mechanical ground to prevent it from sending.

5. Communication unit according to claim 1 wherein:
- the first area includes first electronic components (6) between the first input and the first selector adapted to process the first type of signal (BLACK);
- the second area includes second electronic components (10) between the first input and the second selector adapted to process the second type of signal (RED).

6. Aircraft communication network including at least one communication unit according to any one of claims 1 to 5.

7. Aircraft communication network according to claim 6, including communication terminals (42) at the disposal of the operators that are connected to the unit by optical fibres (52) through which pass the signals exchanged between the terminals and the unit.

8. Communication network according to claim 7, wherein the communication unit and the terminals are equipped with optical sender means and optical receiver means for exchanging optical signals, the unit and the terminals including means (63) for controlling a potential of the optical sender to set the optical sender either to a sending potential (Vcc) or to a ground to prevent it from sending.
